# EUROPEAN PATENT APPLICATION

(11) **EP 2 682 907 A1**
(43) Date of publication of application: **08.01.2014**
(21) Application number: 12719890.1
(22) Date of filing: 31.01.2012
(51) Int. Cl.: G06Q 20/24, G06Q 50/16

(54) **SETTLEMENT SYSTEM**

(30) Priority: 02.02.2011 JP 2011020906
(71) Applicant: Tamagawa, Masanori, Ishikawa 921-8154 (JP)
(72) Inventor: Tamagawa, Masanori, Ishikawa 921-8154 (JP)
(74) Representative: Isarpatent
(86) International application number: PCT/JP2012/052071
(87) International publication number: WO 2012/105531

(57) **Abstract**

Provided is a payment system capable of making recurring payment processing through only single processing at a predetermined period and thereby enhancing credit card transactions on rents of real-estate rental properties. For this purpose, rent information sent from a CAT 14 to a host computer 12 is stored in a recurring payment database 36, and a sales telegram of the rent stored in the recurring payment database 36 is sent to payment request determination means 20 on the assumption that the payment is within a guarantee period stored in a guarantee period database 38.

## Description

### BACKGROUND OF THE INVENTION

The present invention relates to payment systems and, in particular, to a payment system applicable to payment for a rental property, for example.

Currently, credit cards are widely used not only as means of payment for relatively high priced goods but also for micropayments in large supermarkets, gas stations, and the like.

Meanwhile, it is welcome also from the point of view of economic stimulation that customers use their credit cards to buy goods and services continuously. However, since goods and services bought with credit cards are paid back after their receipt, there also is a risk that customers may become unable to repay them due to personal bankruptcy or the like. Therefore, a predetermined credit limit (maximum limit) is set in advance.

Such a credit limit is preliminarily broken down into patterns according to the social position and/or credibility of customers and, in general, expands gradually according to membership period and/or payment history. For example, Japanese Published Unexamined Patent Application No. 2003-22366 proposes a system for automatically updating the maximum limit according to the credibility of the card member.

However, in conventional credit card transactions, no system has been established for avoiding the risk of becoming unable to repay, for a specified amount of recurring payments (e.g., payment of ¥100,000 per month).

Hence, credit card transactions on rents of real-estate rental properties have not conventionally been common. Payments for real-estate rental properties have instead been made by receipt of cash, bank transfer, electronic withdrawal, or the like.

These methods of payment require real-estate management firms and/or landlords to confirm each transfer and/or withdrawal and, in the case of non-payment of rent, may find it difficult to convince borrowers to pay rent, and further there may be concerns that the non-payment would not be easily resolved, imposing a substantial burden upon rent management.

The present invention has been made in view of the circumstances above, and an object thereof is to provide a payment system most suitable for a specified amount of recurring payment such as payment for rents of a rental property.

### SUMMARY OF THE INVENTION

In order to achieve the foregoing object, the present invention is directed to a payment system including a server having: user information storage means for storing user identification information; payment request information storage means for storing payment request information sent from a payment requesting terminal; maximum credit limit storage means for storing a maximum credit limit specified for each user stored in the user information storage means; payment request determination means for comparing a payment request amount contained in the payment request information stored in the payment request information storage means and the maximum credit limit stored in the maximum credit limit storage means to determine whether or not the payment request is acceptable and informing the payment requesting terminal of a result of the determination; recurring payment request information storage means for storing a specified amount of payment request sent from the payment requesting terminal together with information indicating a recurring payment as recurring payment request information; guarantee period storage means for storing a guarantee period specified for each user stored in the user information storage means; and recurring payment requesting means for storing the recurring payment request information of a user the guarantee period of which stored in the guarantee period storage means is within a valid period in the payment request information storage means as payment request information immediately after the determination of acceptability of the payment request by the payment request determination means.

In order to achieve the foregoing object, the present invention is also directed to a payment system including a payment requesting terminal and a server for receiving a payment request from the terminal, in which the server has: user information storage means for storing user identification information; payment request information storage means for storing payment request information sent from the terminal; maximum credit limit storage means for storing a maximum credit limit specified for each user stored in the user information storage means; payment request determination means for comparing a payment request amount contained in the payment request information stored in the payment request information storage means and the maximum credit limit stored in the maximum credit limit storage means to determine whether or not the payment request is acceptable and informing the terminal of a result of the determination; recurring payment request information storage means for storing a specified amount of payment request sent from the terminal together with information indicating a recurring payment as recurring payment request information; guarantee period storage means for storing a guarantee period specified for each user stored in the user information storage means; and recurring payment requesting means for storing the recurring payment request information of a user the guarantee period of which stored in the guarantee period storage means is within a valid period in the payment request information storage means as payment request information immediately after the determination of acceptability of the payment request by the payment request determination means.

In order to achieve the foregoing object, the present invention is further directed to a payment system including a server having: user information storage means for storing user identification information; payment request information storage means for storing payment request information sent from a payment requesting terminal; maximum credit limit storage means for storing a maximum credit limit specified for each user stored in the user information storage means; payment request determination means for comparing a payment request amount contained in the payment request information stored in the payment request information storage means and the maximum credit limit stored in the maximum credit limit storage means to determine whether or not the payment request is acceptable and informing the payment requesting terminal of a result of the determination; recurring payment request information storage means for storing a specified amount of payment request sent from the payment requesting terminal together with information indicating a recurring payment as recurring payment request information; and recurring payment requesting means for storing the recurring payment request information stored in the recurring payment request information storage means in the payment request information storage means as payment request information immediately after the determination of acceptability of the payment request by the payment request determination means.

In the arrangement above, the recurring payment requesting means is adopted to store the recurring payment request information in the payment request information storage means as payment request information immediately after the determination of acceptability of the payment request by the payment request determination means, that is, to store the recurring payment request information in the payment request information storage means as payment request information at a predetermined period, which exhibits the same effect as sending payment request information from the payment requesting terminal at a predetermined period. Accordingly, recurring payment processing can be made through only single processing at a predetermined period. Specifically, it is possible to carry out payment processing for monthly rent on a predetermined date (e.g., on the 25th of every month), for example.

It is noted that "immediately after the determination of acceptability of the payment request by the payment request determination means" means the timing immediately after billing processing at which the usage amount has not yet reached the user's credit limit. Therefore, storing at this timing as payment request information allows the recurring payment request information to be given priority over other payments.

In addition, the recurring payment requesting means is adopted to make recurring payment processing only for the recurring payment request information of a user the guarantee period of which stored in the guarantee period storage means is within the valid period, which can reduce the risk of default. That is, accepting recurring payments only within a guarantee period of, for example, a guarantee company who takes care of payment in case of default allows the risk of default to be reduced.

It is noted that providing notifying means for sending predetermined notice if the guarantee period stored in the guarantee period storage means is out of the valid period allows the possibility of forgetting to make an arrangement such as an extension of the guarantee period to be reduced.

The payment support system according to the present invention allows recurring payment processing to be made through only single processing at a predetermined period.

### BRIEF DESCRIPTION OF THE DRAWING

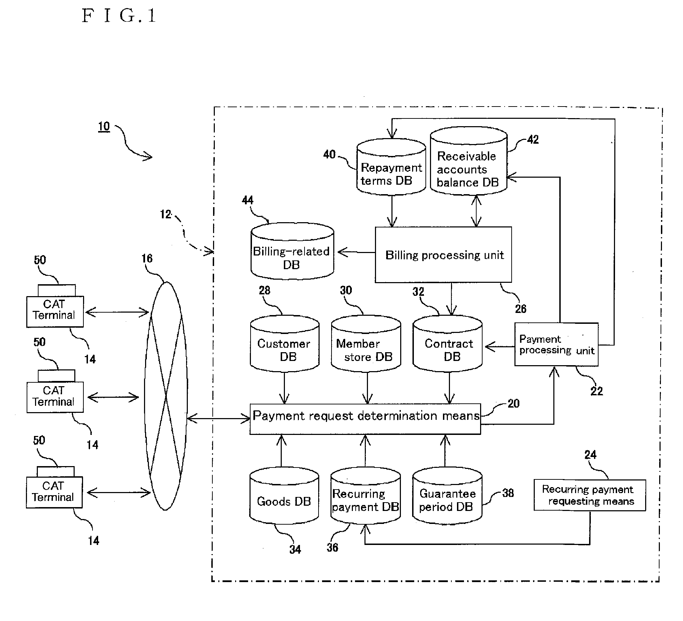

Fig. 1 is a block diagram showing the overall configuration of a credit card payment system as an exemplary payment system to which the present invention is applied.

### DETAILED DESCRIPTION OF THE PREFERRED

### EMBODIMENTS

Modes for carrying out the invention (hereinafter referred to as "embodiments") will be described below with reference to the accompanying drawing. As an example, the embodiments will describe the case of credit card transactions on rents of real-estate rental properties.

Fig. 1 is a block diagram showing the overall configuration of a credit card payment system 10 as an exemplary payment system to which the present invention is applied, including a credit card company's host computer 12 and CATs (Credit Authorization Terminals) 14 for credit card transactions to be managed by respective member stores.

Here, the host computer 12 and the respective CATs 14 are connected via a payment network 16 such as CAFIS (Credit And Finance Information Switching system, a registered trademark of NTT DATA Corporation).

The host computer 12 includes payment request determination means 20, a payment processing unit 22, recurring payment requesting means 24, a billing processing unit 26, a customer database 28, a member store database 30, a contract database 32, a goods database 34, a recurring payment database 36, a guarantee period database 38, a repayment terms database 40, a receivable accounts balance database 42, and a billing-related database 44. These databases above are provided on a hard disk of the host computer 12, respectively.

The customer database 28 stores information such as name, address, phone number, sex, age, date of birth, profession, name of workplace, workplace address, and workplace phone number of respective customers of the credit card company in a manner related uniquely to each customer (user) identification number.

The member store database 30 stores information such as name, address, phone number, type of business, number of employees, sales, capital stock, locational area, type of retailing, date of the start of business, and representative of member stores of the credit card company in a manner related uniquely to each member store identification number.

The contract database 32 stores information such as customer number, expiration date, card type (e.g., gold, standard, or family card), date of contract, negative information (indicating delinquent and/or loss, etc.), accumulated points, margin to the credit limit, and payment history of respective credit cards which the customers independently possess in a manner related to each card number.

The goods database 34 stores information such as name, classification, manufacturer (service provider), and price of goods and services to be paid back in a manner related to each goods number (e.g., JAN code).

The recurring payment database 36 stores monthly payment information (rent information in this embodiment). As an example, credit card numbers, member store numbers, sale proceeds (rents), and the like are stored.

The guarantee period database 38 stores guarantee periods agreed with a guarantee company.

Real-estate management firms and landlords have conventionally required a co-signer for leases to avoid the risk of rent default by the borrower. Then, assigning a co-signer from among relatives has been common. However, in the case of middle-aged and elderly borrowers, their parents may live off a pension or have already died, and additionally the borrowers may not have any brothers/sisters or relatives. It is also difficult for borrowers who came to Japan by themselves to find someone to be their co-signer. In such cases, rental guarantee companies serve as a co-signer. In a case of rents that cannot be withdrawn by a borrower, a rental guarantee company will pay rent equivalent to the credit card company on behalf of the borrower. This embodiment is based on the assumption that there should be an agreement with such a rental guarantee company, and the guarantee period database 38 will store guarantee periods agreed with the guarantee company.

The repayment terms database 40 stores repayment terms (e.g., number of scheduled payments, bonus repayment, and/or revolving repayment) of respective payments using credit cards in a manner related to each payment identification code (connected to each card number).

The receivable accounts balance database 42 stores unpaid amounts resulting from using respective credit cards in a manner related to each payment identification code described above.

Payment processing procedures in the thus arranged credit card payment system 10 will be described for the different cases of common goods and rents.

### Payment for Common Goods

For example, when a customer buys goods at a department store and uses a credit card 50 for payment of the price of the goods, a salesclerk swipes the credit card 50 through a CAT 14 at that selling floor to send a sales telegram (an example of payment request information) to the host computer 12.

The payment request determination means 20 receives the sales telegram sent from the CAT 14 and acquires information such as credit card number, expiration date, member store number, sale proceeds, and repayment terms, which were sent from the CAT 14.

Next, the payment request determination means 20 refers to the contract database 32 to determine whether or not the credit card 50 used for this payment has expired.

It will be clearly understood that if it is here revealed that the credit card has expired or has been reported as stolen, as a matter of course, the card is determined to be unusable and the CAT 14 is informed of this.

The payment request determination means 20 then refers to the contract database 32 to confirm whether or not the usage amount falls within the margin to the limit of the credit card 50 used for this payment.

If it is here determined that the usage amount exceeds the margin, the card is determined to be unusable and the CAT 14 is informed of this. On the contrary, if it is determined that the usage amount falls within the margin, the payment request determination means 20 determines that the payment is acceptable and the CAT 14 is informed of this.

In parallel with such processing above, the payment processing unit 22 performs processing required for the payment.

Specifically, the payment processing unit 22 first lowers the credit limit in the contract database 32 by the usage amount. Next, the payment processing unit 22 registers repayment terms (e.g., number of scheduled payments) for this payment on the repayment terms database 40 and stores the payment amount in the receivable accounts balance database 42.

The billing processing unit 26 monthly refers to the receivable accounts balance database 42 and the repayment terms database 40 to fix the billing amount of the month and stores in the billing-related database 44. Afterward, based on the contents stored in the billing-related database 44, an invoice is issued and the payment is electronically withdrawn to complete the transaction.

### Payment for Rents

Credit card transactions for rents are based on the assumption that the borrower should sign an agreement with a rental guarantee company and pay, for example, one month's rent equivalent as one year's guarantee charge. When such an agreement is signed between the borrower and the rental guarantee company, information including the contract details is sent from a terminal of the rental guarantee company to the host computer 12, and the guarantee period database 38 will store guarantee periods for borrowers who have signed a guarantee agreement with the rental guarantee company.

Next, when the borrower desires to make credit card payments for monthly rent and uses the credit card 50, the rental management company staff swipes the credit card 50 through an in-house CAT 14 to send rent information (an example of recurring payment request information) to the host computer 12.

After a sales telegram is sent from the CAT 14, the recurring payment database 36 stores the credit card number, member store number, and rent amount.

Then, the recurring payment requesting means 24 monthly sends a sales telegram of the rent stored in the recurring payment database 36 to the payment request determination means 20. The payment request determination means 20 receives the telegram and then performs payment processing similarly as in the above-described case of payment for common goods.

The recurring payment requesting means 24 is adopted to send a sales telegram of the rent to the payment request determination means 20 on the assumption that the payment is within the guarantee period stored in the guarantee period database 38. If the guarantee period is expired, no sales telegram of the rent is sent to the payment request determination means 20 and thus the rent is not paid by the credit card.

In the above-described credit card payment system 10 according to this embodiment, since the recurring payment requesting means 24 monthly sends a sales telegram of the rent stored in the recurring payment database 36 to the payment request determination means 20, it is possible to pay for monthly rent only by sending rent information to the host computer 12 and once storing the credit card number and the like in the recurring payment database 36.

It is therefore possible to enhance credit card transactions on rents of real-estate rental properties and thereby to expect realization of a reduction in the burden upon rent management.

Also, in the credit card payment system 10 according to this embodiment, since the recurring payment requesting means 24 sends a sales telegram of the rent to the payment request determination means 20 on the assumption that the payment is within the guarantee period of which the borrower has signed an agreement with the rental guarantee company, it is possible to have the risk of default by the borrower covered by the rental guarantee company.

It is therefore possible to enhance credit card transactions on rents of real-estate rental properties and thereby to expect realization of a reduction in the burden upon rent management.

### Exemplary Variation

The embodiment above is based on the assumption that the borrower has a credit card and describes the case of swiping the borrower's credit card through a CAT to send rent information to the host computer, as an example.

However, in view of the fact that the credit card is used only once at the beginning, the borrower is not necessarily required to have a credit card.

For example, the credit card company may issue not a credit card but only an identification number to the borrower and even in a case where the borrower's identification number may be sent from a terminal such as a CAT, a system similar to that described in the embodiment above can also be implemented.

The embodiment above also describes the case of using a CAT in the rental management company to send rent information to the host computer, as an example.

However, it is not necessarily required to use the CAT in the rental management company, but it suffices only to send rent information to the host computer. Therefore, the borrower's home PCs, cell-phones, or smartphones may be used, for example.

Moreover, although the embodiment above exemplifies rents for real-estate rental properties as a specified amount of recurring payment, it will be clearly understood that any item may be paid without necessarily being limited to rents, as a matter of course.

In addition, ranking between payments for common goods and rents in the embodiment above is not particularly provided. It is, however, often the case that payment for rents should be given priority over payment for common goods because non-payment of the rent may give rise to the loss of a living environment.

It is therefore preferable to send a sales telegram of the rent stored in the recurring payment database to the payment request determination means at the timing immediately after monthly billing processing by the billing processing unit at which the usage amount has not yet reached the credit limit so that payment for rents is given priority over payment for common goods.

### Description of Reference Numerals

- 10: Credit card payment system
- 12: Host computer
- 14: CAT
- 20: Payment request determination means
- 22: Payment processing unit
- 24: Recurring payment requesting means
- 26: Billing processing unit
- 28: Customer database
- 30: Member store database
- 32: Contract database
- 34: Goods database
- 36: Recurring payment database
- 38: Guarantee period database
- 40: Repayment terms database
- 42: Receivable accounts balance database
- 44: Billing-related database
- 50: Credit card

## Claims

1. A payment system comprising a server having:
user information storage means for storing user identification information;
payment request information storage means for storing payment request information sent from a payment requesting terminal;
maximum credit limit storage means for storing a maximum credit limit specified for each user stored in the user information storage means;
payment request determination means for comparing a payment request amount contained in the payment request information stored in the payment request information storage means and the maximum credit limit stored in the maximum credit limit storage means to determine whether or not the payment request is acceptable and informing the payment requesting terminal of a result of the determination;
recurring payment request information storage means for storing a specified amount of payment request sent from the payment requesting terminal together with information indicating a recurring payment as recurring payment request information;
guarantee period storage means for storing a guarantee period specified for each user stored in the user information storage means; and
recurring payment requesting means for storing the recurring payment request information of a user the guarantee period of which stored in the guarantee period storage means is within a valid period in the payment request information storage means as payment request information immediately after the determination of acceptability of the payment request by the payment request determination means.

2. The payment system according to claim 1, wherein
the server has notifying means for sending predetermined notice if the guarantee period stored in the guarantee period storage means is out of the valid period.

3. A payment system comprising a payment requesting terminal and a server for receiving a payment request from the terminal, wherein
the server has:
user information storage means for storing user identification information;
payment request information storage means for storing payment request information sent from the terminal;
maximum credit limit storage means for storing a maximum credit limit specified for each user stored in the user information storage means;
payment request determination means for comparing a payment request amount contained in the payment request information stored in the payment request information storage means and the maximum credit limit stored in the maximum credit limit storage means to determine whether or not the payment request is acceptable and informing the terminal of a result of the determination;
recurring payment request information storage means for storing a specified amount of payment request sent from the terminal together with information indicating a recurring payment as recurring payment request information;
guarantee period storage means for storing a guarantee period specified for each user stored in the user information storage means; and
recurring payment requesting means for storing the recurring payment request information of a user the guarantee period of which stored in the guarantee period storage means is within a valid period in the payment request information storage means as payment request information immediately after the determination of acceptability of the payment request by the payment request determination means.

4. The payment system according to claim 3, wherein
the server has notifying means for sending predetermined notice if the guarantee period stored in the guarantee period storage means is out of the valid period.

5. A payment system comprising a server having:
user information storage means for storing user identification information;
payment request information storage means for storing payment request information sent from a payment requesting terminal;
maximum credit limit storage means for storing a maximum credit limit specified for each user stored in the user information storage means;
payment request determination means for comparing a payment request amount contained in the payment request information stored in the payment request information storage means and the maximum credit limit stored in the maximum credit limit storage means to determine whether or not the payment request is acceptable and informing the payment requesting terminal of a result of the determination;
recurring payment request information storage means for storing a specified amount of payment request sent from the payment requesting terminal together with information indicating a recurring payment as recurring payment request information; and
recurring payment requesting means for storing the recurring payment request information stored in the recurring payment request information storage means in the payment request information storage means as payment request information immediately after the determination of acceptability of the payment request by the payment request determination means.
